# EUROPÄISCHE PATENTSCHRIFT

(11) **EP 0 962 297 B1**
(45) Veröffentlichungstag und Bekanntmachung des Hinweises auf die Patenterteilung: **06.06.2007**
(21) Anmeldenummer: 99107712.4
(22) Anmeldetag: 17.04.1999
(51) Int. Cl.: B29C 45/53, B29C 45/50

(54) **Vorrichtung zur Betätigung eines Einspritzelementes**
Apparatus for actuating an injection moulding element
Dispositif pour actionner un élément de moulage par injection

(30) Priorität: 04.05.1998 DE 19819759
(43) Veröffentlichungstag der Anmeldung: 08.12.1999
(73) Patentinhaber: Adcuram Maschinenbauholding GmbH, 80333 München (DE)
(72) Erfinder: Gruber, Reinhard Dipl.-Wirt.-Ing., 7101 Neudörfl (AT); Bleier, Harald Ing., 2700 Wiener Neustadt (AT); Ganz, Martin, 2801 Katzelsdorf (AT)
(74) Vertreter: Gosdin, Michael

(56) Entgegenhaltungen:
- EP-A- 0 451 294
- DE-A- 1 529 796
- PATENT ABSTRACTS OF JAPAN vol. 016, no. 376 (M-1294), 12. August 1992 (1992-08-12) & JP 04 122618 A (TDK CORP), 23. April 1992 (1992-04-23)

## Beschreibung

Die Erfindung bezieht sich auf eine Vorrichtung zur Betätigung eines Einspritzelements für das Einspritzen einer definierten Menge plastifizierten Kunststoffmaterials oder dergleichen in ein Spritzgießwerkzeug, wobei das Einspritzelement als Kolben oder als Schnecke ausgebildet ist und in einer Führung geführt ist und durch ein Betätigungselement verschoben wird.

Einspritzsysteme nach dem Stand der Technik werden üblicherweise durch Spindelsysteme oder durch hydraulische Antriebe betätigt. Bei bekannten Spritzgießvorrichtungen befindet sich zu diesem Zweck beispielsweise ein hydraulisches Kolben-Zylinder-System in axialer Verbindung mit einer Plastifizierschnecke, das diese vorantreibt, womit Kunststoffschmelze oder dergleichen in ein Spritzgießwerkzeug injiziert wird.

Bei elektrisch angetriebenen Systemen sind beispielsweise Spindeln vorgesehen, die mit Servomotoren verbunden sind. Durch die Bewegung der Servomotore werden die Spindeln axial bewegt. Ihre Bewegung überträgt sich auf eine Einspritzschnecke, so daß diese präzise bewegt werden kann; das einzuspritzende Schmelzevolumen läßt sich auf diese Weise genau steuern bzw. regeln.

In jüngerer Zeit ist der Bedarf aufgetreten, Spritzgießformteile mit besonders kleinen Ausmaßen herzustellen. Hier sind mikro-mechanische Bauteile (z. B. Mikrozahnräder für Uhren), medizintechnische Kleinteile und optoelektronische Elemente (z. B. Teile für Lichtleiter) als Beispielbauteile zu nennen, bei denen die Herstellung mit klassischen Spritzgießmaschinen Probleme bereitet.

Eines dieser Probleme ist dadurch gegeben, daß kleinste Verschiebewege einer Einspritzschnecke präzise gefahren werden müssen, um die gewünschte Menge Schmelze ins Werkzeug einzuspritzen. Dieses Bewegung muß in kürzester Zeit erfolgen, da ansonsten die Gefahr besteht, daß die minimale Schmelzemenge, die plastifiziert worden ist, "einfriert".

Die Eigendynamik hydraulischer Antriebe und auch von Servoantrieben ermöglicht es nicht, die benötigte Präzision der Einspritzbewegung für den Einspritzstempel in der kurzen Zeit, die zur Verfügung steht, zu bewerkstelligen.

Der vorliegenden Erfindung liegt daher die **Aufgabe** zugrunde, eine verbesserte Vorrichtung zum Betätigen eines Einspritzstempels zu schaffen, mit der es möglich ist, kleinste Verschiebewege in kürzester Zeit reproduzierbar auszuführen. Weiterhin soll es mit der Vorrichtung möglich sein, den Umschaltpunkt vom Einspritz- auf den Nachdruckvorgang präzise anzufahren und damit die Nachdruckphase in hoher Dynamik zeit- und weggenau einzuleiten. D. h. der Umschaltpunkt soll präzise erreicht werden, ohne daß es zu einem "Überschießen" des Einspritzelements kommt.

Die **Lösung** dieser Aufgabe durch die Erfindung ist in Anspruch 1 definiert.

Zwecks Rückhub des Einspritzelements (1) ist fortbildungsgemäß vorgesehen, daß ein zweiter Stößel (7) angeordnet ist, der von einer zweiten Kulissenscheibe (8) betätigt wird. Alternativ dazu kann vorgesehen sein, daß zwecks Rückhub des Einspritzelements (1) in der Kulissenscheibe (5) eine Kontur eingearbeitet ist, in der der Stößel (4) zwangsgeführt wird.

Mit der vorgesehenen Ausgestaltung ist es möglich, in kürzester Zeit einen exakt vorherbestimmten Hub eines Einspritzelements zu erzeugen, der beliebig oft reproduzierbar ist.

In der Zeichnung ist ein Ausführungsbeispiel der Erfindung dargestellt.
- Fig. 1: zeigt eine schematische perspektivische Ansicht der Vorrichtung zum Betätigen des Einspritzelements, in
- Fig. 2: ist schematisch die Seitenansicht der Vorrichtung zu sehen,
- Fig. 3: zeigt die Draufsicht auf die Kulissenscheibe 5.

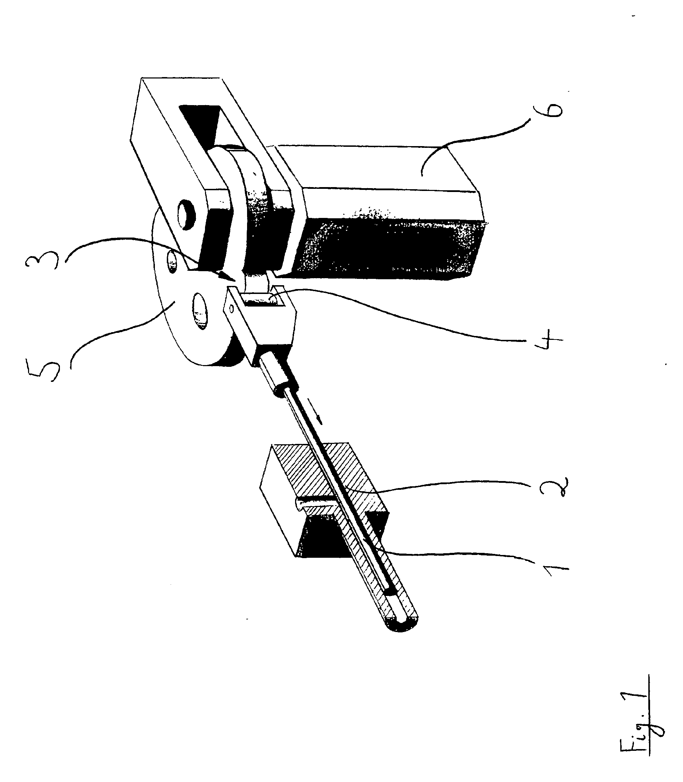

In Fig. 1 ist die Vorrichtung zum Betätigen des Einspritzelements 1 zu sehen. Das Einspritzelement 1 ist in einer Führung 2 geführt, so daß Element 1 und Führung 2 ein Kolben-Zylinder-Element darstellen, mit dem plastifizierte Schmelze in ein Werkzeug injiziert werden kann.

Es kommt nun darauf an, die Vorschubbewegung (in Richtung des Pfeils) sowohl präzise als auch in kürzester Zeit, aber auch mit der benötigten Kraft zu bewerkstelligen. Hierzu ist ein Betätigungselement 3 vorgesehen. Dieses besteht aus einem Stößel 4, der in Kontakt mit einer Kulissenscheibe 5 steht Die Kulissenscheibe 5 übt, wenn sie gedreht wird, aufgrund ihrer Kurvenform eine Kraft auf den Stößel 4 aus, so daß das Einspritzelement 1 bewegt wird. Die Drehung der Kulissenscheibe 5 erfolgt mittels des Servomotors 6.

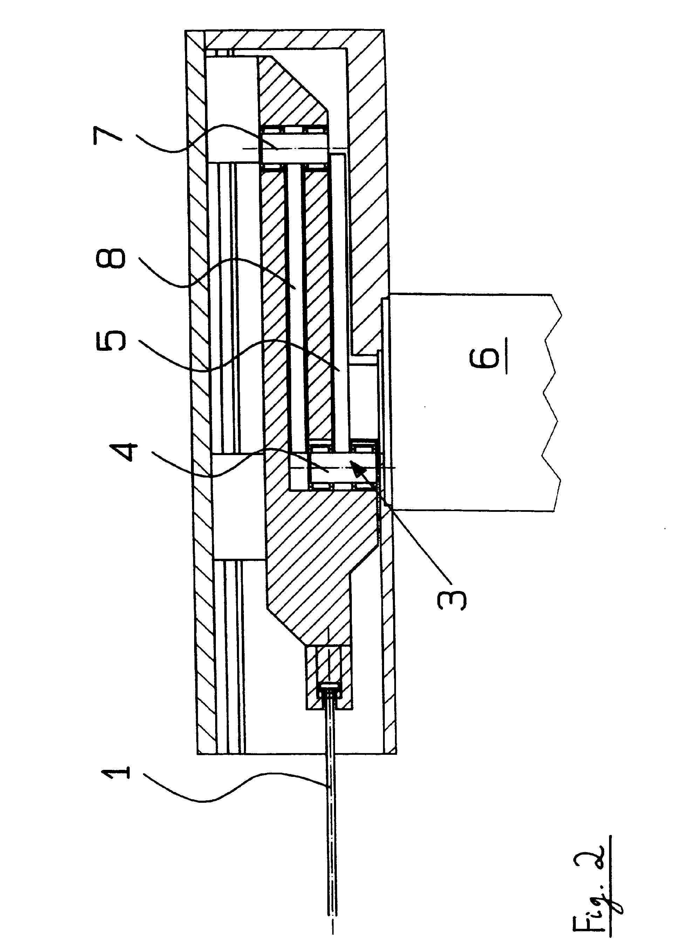

In Fig. 2 ist im wesentlichen derselbe Aufbau zu sehen. Hier ist ergänzend jedoch eine weitere, als eine zweite Kulissenscheibe 8 vorgesehen, die ebenfalls synchron von dem Motor 6 gedreht wird. Über einen zweiten Stößel 7 erfolgt eine zwangsgeführte Mitnahme des Einspritzelements 1, wenn dieses wieder - am Ende eines Spritzgießzyklus - in die Ausgangslage zurückgeholt werden soll.

Alternativ dazu - dieser Fall ist jedoch nicht dargestellt - kann der Stößel 4 auch in einer Kontur zwangsgeführt sein, die in die Kulissenscheibe 5 eingearbeitet ist. Damit erübrigt sich eine zweite Kulisse zur Rückholung des Elements 1.

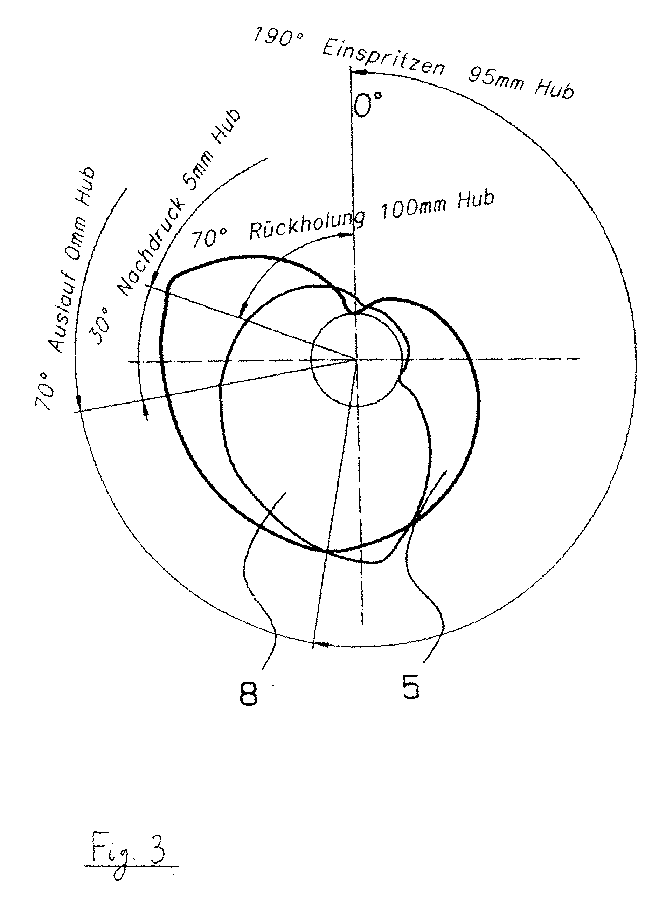

In Fig. 3 ist beispielhaft dargestellt, wie die Kontur der Kulissenscheibe 5 ausgestaltet sein kann, um das erfindungsgemäße Ziel in effizienter Weise zu erreichen. Der Ausgangspunkt des Spritzgießzyklus ist die eingetragene Null-Marken-Position der Kulissenscheibe 5. Sie wird im Verlauf eines Spritzgießzyklus um 360° gedreht, so daß sie wieder in der Anfangsposition ist.

Über einen ersten Drehwinkel von 190 ° erfolgt im gezeigten Ausführungsfalle die Einspritzbewegung. Es ist zu erkennen, daß die Kulissenscheibe 5 in diesem Bereich so geformt ist, daß sich ein schnelles Anheben des Einspritzelements 1 über den Stößel 4 (jeweils nicht dargestellt in Fig. 3) ergibt. Im gezeigten Falle ist es ein Hub von 95 Millimetern, der nach 190 ° erreicht ist. Es schließt sich über einen Winkelbereich von 70 ° ein Auslaufbereich an, in dem kein weiterer Hub erzeugt wird. Dann wird ein weiterer Hub von 5 Millimetern über die nächsten 30 ° Drehwinkel der Scheibe 5 erzeugt. Damit wird ein Nachdruck auf die Schmelze erzeugt. Im letzten Drehwinkelbereich von 70 ° erfolgt die Rückholung des Einspritzelements um insgesamt 100 Millimeter. Das Einspritzelement befindet sich demnach nach einer Umdrehung der Kulissenscheibe 5 wieder in seiner Ausgangssituation.

Die entsprechende Kontur der zweiten Kulissenscheibe 8 für die Rückholung des Einspritzelements ist ebenfalls in Fig. 3 eingezeichnet.

Die Drehung der Kulissenscheibe 5 mittels des Servomotors kann dabei präzise und winkelgenau erfolgen. Dem Motor 6 sind dabei entsprechende Steuerdaten vorgegeben, so daß die einzelnen oben erläuterten Winkelbereiche in beliebigen unterschiedlichen Zeiten zurückgelegt werden können - entsprechend der Programmierung der Motorsteuerung.

Nicht dargestellt ist eine Fortbildung der Vorrichtung: Durch eine nach dem Nachdruckprozeß nochmals erfolgende kurzfristige Zunahme des Hubs - mittels einer entsprechenden Kontur der Kulissenscheibe 5 - kann ein zwischenzeitlich erstarrter Anguß, ggf. zusammen mit dem Formteil selber, aus dem Werkzeug (nach dessen Öffnung) ausgestoßen werden.

Weiterhin muß die Kulissenscheibe 5 nicht notwendigerweise immer die gleiche Drehrichtung haben. Es kann auch vorgesehen werden, daß nach dem Zyklusende auch ein Zurückdrehen der Kulissenscheibe 5 erfolgt. Dies kann im Zusammenhang mit einer Selbsthemmung am Ende der Kulissenbahn interessant bzw. unumgänglich sein.

Im Ausführungsbeispiel ist stets von einem Einspritzkolben die Rede gewesen. Genauso ist es natürlich auch - unter Nutzung der erfindungsgemäßen Idee - möglich, eine Einspritzschnecke in ihrer axialen Bewegung während des Einspritzens zu steuern, wobei ja eine Schnecke bekanntlich während des Einspritzens wie ein Kolben wirkt.

Eine wesentliche Grundüberlegung der vorliegenden Erfindung ist es also, daß die Kontur der Kulissenscheibe so gewählt wird, daß die dynamischen Geschwindigkeitsänderungen, welche für das Einspritzen von plastifiziertem Kunststoffmaterial oder dergleichen benötigt wird, schneller erfolgt, als es mit Servoantrieben wegen deren Massenträgheit möglich wäre.

### Bezugszeichenfiste:

- 1: Einspritzelement
- 2: Führung
- 3: Betätigungselement
- 4: Stößel
- 5: Kulissenscheibe
- 6: Servomotor
- 7: zweiter Stößel
- 8: zweite Kulissenscheibe

## Patentansprüche

1. Vorrichtung zur Betätigung eines Einspritzelements (1) für das Einspritzen einer definierten Menge plastifizierten Kunststoffmaterials oder dergleichen in ein Spritzgießwerkzeug,
wobei das Einspritzelement (1) als Kolben oder als Schnecke ausgebildet ist und in einer Führung (2) geführt ist und durch ein Betätigungselement (3) verschoben wird,
**dadurch gekennzeichnet, dass**
das Betätigungselement (3) einen Stößel (4) aufweist, der auf einer Kulissenscheibe (5) **direkt** geführt ist,
wobei die Kulissenscheibe (5) durch einen gesteuerten oder geregelten Servomotor (6) positionsgenau gedreht wird
wobei die Kulissenscheibe (5) einen Drehwinkelbereich aufweist, über den gezielt ein Nachdruck auf das Einspritzelement (1) aufgebracht werden kann.

2. Vorrichtung nach Anspruch 1, **dadurch gekennzeichnet, dass** zwecks Rückhub des Einspritzelements (1) ein zweiter Stößel (7) angeordnet ist, der von einer zweiten Kulissenscheibe (8) betätigt wird.

3. Vorrichtung nach Anspruch 1, **dadurch gekennzeichnet, dass** zwecks Rückhub des Einspritzelements (1) in der Kulissenscheibe (5) eine Kontur eingearbeitet ist, in der der Stößel (4) zwangsgeführt wird.

## Claims

1. Apparatus for actuating an injection element (1) for the injection of a defined quantity of plasticized plastic material or the like into an injection mould, the injection element (1) being formed as a piston or as a screw and being guided in a guide (2) and displaced by an actuating element (3), **characterized in that** the actuating element (3) comprises a tappet (4) which is guided directly on a crank disc (5), the crank disc (5) being rotated in a positionally accurate manner by means of a servomotor (6) with open loop or closed loop control, and the crank disc (5) having a rotational angle range over which a holding pressure can be applied to the injection element (1) in a targeted manner.

2. Apparatus according to Claim 1, **characterized in that**, for the return stroke of the injection element (1), there is arranged a second tappet (7) which is actuated by a second crank disc (8).

3. Apparatus according to Claim 1, **characterized in that**, for the return stroke of the injection element (1), a contour is machined into the crank disc (5) and the tappet (4) is positively guided therein.

## Revendications

1. Dispositif pour actionner un élément de moulage par injection (1) pour le moulage par injection d'une quantité définie de matériau synthétique plastifié ou autre similaire dans un moule de moulage par injection, dont l'élément de moulage par injection (1) est en forme de piston ou de vis sans fin, guidé dans un guidage (2) et déplacé par un élément d'actionnement (3),
**caractérisé en ce que**
l'élément d'actionnement (3) comporte un poussoir (4) mené directement sur une came (5),
la came (5) tournant exactement en position par un servomoteur (6) commandé ou régulé, et
la came (5) présente une zone d'angle de rotation sur laquelle un maintien en pression ciblé peut être exercé sur l'élément de moulage par injection (1).

2. Dispositif selon la revendication 1,
**caractérisé en ce qu'**
un deuxième poussoir (7) est actionné par une deuxième came (8), pour la course de retour de l'élément de moulage par injection (1).

3. Dispositif selon la revendication 1,
**caractérisé en ce qu'**
un contour, dans lequel le poussoir (4) est à guidage forcé, est intégré dans la came (5) pour la course de retour de l'élément de moulage par injection (1).
